# EUROPÄISCHE PATENTSCHRIFT

(11) **EP 4 102 121 B1**
(45) Veröffentlichungstag und Bekanntmachung des Hinweises auf die Patenterteilung: **28.02.2024**
(21) Anmeldenummer: 22177494.6
(22) Anmeldetag: 07.06.2022
(51) Int. Cl.: F16L 21/035, F16L 25/00, F16L 25/14

(54) **MUFFENADAPTER MIT ZENTRIER- UND FÜHRUNGSRING**
BUSHING ADAPTER WITH CENTERING AND GUIDING RING
ADAPTATEUR DE MANCHON POURVU DE BAGUE DE CENTRAGE ET DE GUIDAGE

(30) Priorität: 08.06.2021 DE 202021103085 U
(43) Veröffentlichungstag der Anmeldung: 14.12.2022
(73) Patentinhaber: Funke Kunststoffe GmbH, 59071 Hamm-Uentrop (DE)
(72) Erfinder: Funke, Norbert, 48324 Sendenhorst (DE); Funke, Hans-Günter, 48324 Sendenhorst (DE)
(74) Vertreter: Patentanwälte Olbricht Buchhold Keulertz

(56) Entgegenhaltungen:
- DE-U1-202016 104 133
- US-A- 2 488 245

## Beschreibung

Die Erfindung betrifft einen Muffenadapter nach dem Oberbegriff des Anspruchs 1.

Aus der DE 20 2015 102 252 U1, DE 20 2016 106 736 L 1 und DE 20 2016 104 133 U1 sind derartige Muffenadapter bekannt. Wenn ein solcher Muffenadapter in ein als Schacht- oder Rohrleitungsabschnitt ausgestaltetes Rohrbauteil eingeführt wird, beispielsweise in die Muffe eines Steinzeugrohrs, kann eine in dem Rohrbauteil angeordnete Dichtung das Einführen des Muffenadapters erschweren. Bei Rohren, die nach DIN EN 295 ausgestaltet sind und eine Steckmuffe L nach dem Verbindungssystem F aufweisen, ist die dabei verwendete Dichtung sowohl sehr fest als auch sehr dick. Ohnehin muss ein Gleitmittel auf die Dichtung aufgetragen werden, damit sich ein Muffenadapter überhaupt in die Dichtung und somit in das Steinzeug-Rohrbauteil einführen lässt. Wenn dann eine Kraft in axialer Richtung auf den Muffenadapter aufgebracht wird, um diesen in die Dichtung und das Rohrbauteil einzuführen, bewirkt das Gleitmittel jedoch in nachteiliger Weise, dass geringste Unregelmäßigkeiten bei der Ausrichtung des Muffenadapters und / oder bei der Wirkungsrichtung der aufgebrachten Kraft dazu führen, dass der Muffenadapter seitlich ausweicht, statt in der vorgesehenen Einführungsrichtung in die Dichtung einzudringen. Aufgrund der beengten Platzverhältnisse in einem Rohrgraben sind häufig die Arbeitsbedingungen suboptimal, um hinsichtlich der Ausrichtung des Muffenadapters oder auch der Werkzeuge, die zum Einführen des Muffenadapters in das Rohrbauteil verwendet werden, die idealen Voraussetzungen zu schaffen, die theoretisch ein geradliniges Einführen des Muffenadapters in das Rohrbauteil und dessen Dichtung ohne Ausweichbewegungen des Muffenadapters ermöglichen würden.

Der Erfindung liegt die Aufgabe zugrunde, einen gattungsgemäßen Muffenadapter dahingehend zu verbessern, dass dieser möglichst problemlos ermöglicht, in unterschiedlich ausgestaltete Rohrbauteile auch dann eingeführt zu werden, wenn das betreffende Rohrbauteil eine Dichtung aufweist, die einen hohen Einführungswiderstand bietet.

Diese Aufgabe wird durch einen Muffenadapter mit den Merkmalen des Anspruchs 1 gelöst. Vorteilhafte Ausgestaltungen sind in den Unteransprüchen beschrieben.

Die Erfindung schlägt mit anderen Worten vor, an dem sogenannten Einsteckende, mit welchen der Muffenadapter in das Rohrbauteil eingeführt wird, nicht etwa die Dichtung selbst den vorderen Bereich dieses Einsteckende bilden zu lassen, sondern dort vielmehr einen Führungsring anzuordnen. Der Führungsring besteht aus einem Werkstoff, der härter ist als der Werkstoff, aus dem die Dichtung des Muffenadapters besteht, so dass er eine hohe Formstabilität sicherstellt, auch wenn er einer Dichtung des Rohrbauteils angelegt wird, die aufgrund ihrer Geometrie und / oder ihrer Materialbeschaffenheit einen hohen Widerstand gegen die Einführungsbewegung des Muffenadapters bietet.

Der Führungsring ist der Dichtung vorgelagert, so dass beim Einführen des Muffenadapters in das Rohrbauteil der Führungsring zunächst in Kontakt mit dem Rohrbauteil bzw. der Dichtung des Rohrbauteils gerät. Wenn dann die erwähnte axiale Kraft aufgebracht wird, um den Muffenadapter in das Rohrbauteil einzuführen, bewirkt die Formstabilität des Führungsrings, das sich nicht etwa aufgrund eines hohen Einführungswiderstandes ein Abschnitt des Muffenadapters verformt, was in Folge dann zu einer Schrägstellung des Muffenadapters führen kann, sondern dass vielmehr die Dichtung des Rohrbauteils verformt wird, so dass der Muffenadapter unter Beibehaltung seiner Ausrichtung weiter in das Rohrbauteil bzw. dessen Dichtung eindringen kann.

Schließlich ist vorschlagsgemäß auch vorgesehen, dass sich der äußere Durchmesser des Führungsrings vor dessen vorderen Ende nach hinten erweitert. Auf diese Weise werden beim Einführen die Widerstandskräfte erst nach und nach größer, mit dem zunehmendem axialen Vorschub des Muffenadapters, so dass zunächst die gewünschte Zentrierung des Muffenadapters im Rohrbauteil erfolgt. Wenn beim weiteren Vorschub des Muffenadapters erhebliche Widerstandskräfte auftreten, wird ein seitliches Ausweichen des Muffenadapters dadurch vermieden, dass der Muffenadapter, nämlich zumindest der Führungsring, in dem Rohrbauteil bzw. in dessen Dichtung bereits ringsum geführt ist und dementsprechend gegen radiale Ausweichbewegungen gesichert ist. Daher können die hohen Kräfte, die zur Überwindung eines hohen Einführungswiderstandes aufgebracht werden müssen, nun problemlos ausgeübt werden, ohne eine Schrägstellung oder eine ähnliche Ausweichbewegung des Muffenadapters relativ zu dem Rohrbauteil zu bewirken.

Während die Dichtung des Muffenadapters typischerweise aus einem Elastomerwerkstoff besteht, kann der demgegenüber härtere Führungsring beispielsweise aus Metall oder aus einem harten Kunststoff wie z.B. PVC bestehen.

Der äußere Durchmesser des Führungsrings kann beispielsweise sich geradlinig erweitern, so dass der Führungsring außen konisch verläuft. Vorteilhaft kann allerdings vorgesehen sein, dass sich der äußere Durchmesser konkav gebogen von vorne nach hinten erweitert. Hierdurch wird erreicht, dass auf einer vorteilhaft kurzen axialen Länge im Vergleich zu einem geradlinig konischen Verlauf die vorhandene Rohrdichtung aufspreizt. Am vordersten Ende des Führungsrings wird durch den konkaven Verlauf ein Abschnitt des Führungsrings geschaffen, der eine sichere Zentrierung innerhalb der Rohrdichtung bewirkt, während eine geradlinig konische Außenfläche des Führungsrings in einem deutlich weniger spitzen Winkel zur Rohrdichtung stehen würde und unerwünschte Ausweichbewegungen ggf. zulassen würde. Im Vergleich zu einem Führungsring mit einer geradlinig konischen Außenfläche kann daher die gewünschte Zentrierung und Führung mit einer deutlich kürzeren axialen Länge durch den konkav gebogenen Verlauf der Außenfläche erreicht werden.

An den konkav gebogenen Abschnitt kann sich ein konvex gebogener Abschnitt anschließen, innerhalb dessen sich der Durchmesser des Führungsrings auch noch weiterhin erweitert, so dass unter Vermeidung von Absätzen oder Kanten eine annähernd S-förmige, weich geschwungene äußere Kontur des Führungsrings geschaffen wird, die ein möglichst widerstandsarmes Eindringen des Muffenadapters in die Dichtung unterstützt.

Die Muffenadapter werden in unterschiedlichen Durchmessern bereitgestellt und sind für die Verwendung an bestimmten Rohrbauteilen vorgesehen. In Anpassung an die dabei verwendeten Rohrdichtungen, welche die Rohrbauteile aufweisen und deren Abmessungen bekannt sind, kann der Führungsring passend dimensioniert sein, so dass er mit seinem vordersten Ende zunächst in die Dichtung des Rohrbauteils eingeführt werden kann, ohne Kräfte auf diese Dichtung ausüben und die Dichtung verformen zu müssen, wenn der vordere Außendurchmesser des Führungsrings dementsprechend gering bemessen ist. Da sich der Außendurchmesser des Führungsrings nach hinten erweitert, kommt es erst dann zu einem umlaufenden, immer noch kraftfreien Kontakt des Führungsrings mit der Rohrdichtung, nachdem der Führungsring bereits in die Rohrdichtung eingetaucht ist. Erst beim weiteren Vorschub müssen dann die entsprechenden Vorschubkräfte in axialer Richtung aufgebracht werden, um den Muffenadapter in das Rohrbauteil einführen zu können.

Eine zusätzliche Hilfe gegen Ausweichbewegungen, aber auch ein sanfter Anstieg der aufzubringenden axialen Kraft, die erforderlich ist, um den Muffenadapter in das Rohrbauteil einzuführen, kann dadurch erreicht werden, dass die äußere Oberfläche des Führungsrings mit längs verlaufenden, also in radialer bzw. axialer Richtung des Muffenadapters verlaufenden Rippen oder Rillen versehen ist. Durch die Profilierung werden beispielsweise Drehbewegungen des Muffenadapters um seine Längsachse verhindert, und außerdem wird dadurch, dass der Führungsring nicht über seinen gesamten Umfang gleichmäßig der Rohrdichtung anliegt, die Kraft verringert, die zu einer Verformung der Rohrdichtung erforderlich ist. Bei weiteren Vorschub des Muffenadapters muss diese Verformung der Rohrdichtung zwar erreicht und die erforderliche axiale Vorschubkraft aufgebracht werden, jedoch ist dann der Muffenadapter, insbesondere sein Führungsring, bereits ausreichend weit in die Rohrdichtung eingedrungen, um eine zuverlässige Führung des Muffenadapters bewirken zu können und Ausweichbewegungen bei den anschließend auftretenden, hohen Kräften zu vermeiden.

Ein Ausführungsbeispiel der Erfindung wird nachfolgend anhand der rein schematischen Darstellung näher erläutert.

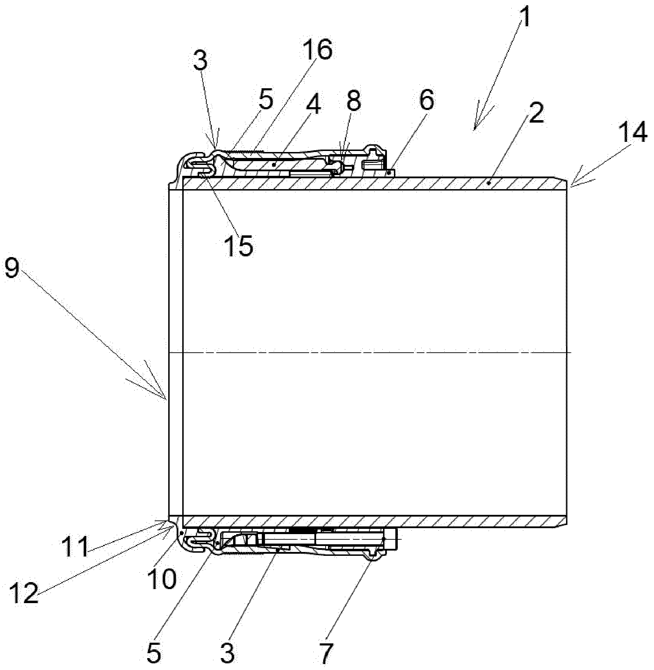

Die Zeichnung zeigt einen Längsschnitt durch einen Muffenadapter 1, der einen Rohrabschnitt 2, eine Dichtung 3 und einen Keil 4 aufweist. Der Keil 4 kann in axialer Richtung, in der Zeichnung nach links, verlagert werden und wird dabei durch ein ortsfest verbleibendes Widerlager 5 radial nach außen gedrängt. Während ein erster Abschnitt 15 der Dichtung 3 dem Rohrabschnitt 2 anliegt und ebenfalls ortsfest in dieser Anordnung verbleibt, wird durch die Verlagerung des Keils 4 ein zweiter Abschnitt 16 der Dichtung 3 zusammen mit dem Keil 4 ebenfalls radial nach außen bewegt und kann auf diese Weise einem Rohrbauteil abdichtend angelegt werden.

Die axiale Bewegung des Keils 4 erfolgt mittels eines Treibrings 6, der dem Keil 4 anliegt und ein Schwenklager 8 aufweist, in welchem der Keil 4 schwenkbeweglich gelagert ist, so dass er unterschiedlich weit radial nach außen geschwenkt werden kann. Der Treibring 6 ist als geschlossener Ring ausgestaltet. Entlang des Umfangs des Rohrabschnitts 2 ist eine Vielzahl von Keilen 4 angeordnet, deren zirkumferente Abstände zueinander mit zunehmender Spreizung des zweiten Dichtung-Abschnitts 16 größer werden.

Der Verlauf der Schnittlinie des Längsschnitts ist so gewählt, dass in einem von 180° abweichenden Winkel unterschiedlich ausgestaltete Umfangs-Abschnitte des Muffenadapters 1 erkennbar sind. In der Zeichnung unten ist eine Spannschraube 7 ersichtlich, die sich durch den Treibring 6 erstreckt und mit einem Gewinde zusammenwirkt, welches im Widerlager 5 vorgesehen ist. Über den Umfang des Muffenadapters 1 verteilt sind zwei oder mehr Spannschrauben 7 angeordnet, so dass der Treibring 6 gleichmäßig in axialer Richtung zum Widerlager 5 hin bewegt werden kann und dabei die Keile 4 spreizt.

Das in der Zeichnung links dargestellte Ende des Muffenadapters 1 stellt ein so genanntes Einsteckende 9 dar, mit welchem der Muffenadapter 1 in ein Rohrbauteil eingeführt werden kann. An diesem Einsteckende 9 befindet sich ein Führungsring 10, dessen äußerer Durchmesser sich von einer Vorderkante 11 zunächst in einer konkav verlaufenden Biegung 12 nach hinten - in der Zeichnung also nach rechts hin - vergrößert und der dann konvex gebogen in seinen endgültigen, größten Außendurchmesser übergeht.

Der Rohrabschnitt 2 besteht aus Kunststoff und ist dadurch hergestellt worden, dass ein Kunststoffrohr auf die gewünschte Länge abgelängt worden ist. Der Muffenadapter 1 stellt mit dem Ende des Rohrabschnitts 2, welches dem Einsteckende 9 gegenüberliegt und am äußeren Umfang eine Fase aufweist, ein Spitzende 14 bereit, welches zum Anschluss weiterer Kunststoffrohre dient, in dem ein solches Kunststoffrohr mit seinem Muffenende auf dieses Spitzende 14 des Muffenadapters 1 aufgeschoben werden kann.

### Bezugszeichen:

- 1: Muffenadapter
- 2: Rohrabschnitt
- 3: Dichtung
- 4: Keil
- 5: Widerlager
- 6: Treibring
- 7: Spannschraube
- 8: Schwenklager
- 9: Einsteckende
- 10: Führungsring
- 11: Vorderkante
- 12: Biegung
- 14: Spitzende
- 15: Erster Abschnitt
- 16: Zweiter Abschnitt

## Patentansprüche

1. Muffenadapter (1),
• mit einem zylindrischen Rohrabschnitt (2),
• einer den Rohrabschnitt (2) zirkumferent außen umgebenden Dichtung (3) aus einem elastisch verformbaren Werkstoff,
wobei die Dichtung (3) einen ersten Abschnitt (15) aufweist, mit welchem sie dicht an den Rohrabschnitt (2) anschließt,
sowie einen zweiten Abschnitt (16), der gegenüber dem Rohrabschnitt (2) radial nach außen beweglich ist,
• und mit wenigstens einem Dehnelement,
welches zwischen dem Rohrabschnitt (2) und dem zweiten Abschnitt (16) der Dichtung (3) angeordnet ist, und welches radial nach außen beweglich ist, derart, dass der Außendurchmesser der Dichtung (3) in Abhängigkeit von der jeweiligen Stellung des Dehnelements veränderlich ist,
• und mit einem Einsteck-Ende im Bereich der Dichtung (3), das dazu bestimmt ist, in ein Rohrbauteil eingeführt zu werden,
• wobei die Dichtung (3) dazu bestimmt ist, dem Rohrbauteil dicht angelegt zu werden,
**dadurch gekennzeichnet,**
**dass** am Einsteck-Ende ein Führungsring (10) angeordnet ist,
der aus einem im Vergleich zur Dichtung (3) härteren Werkstoff besteht,
in Einführungsrichtung der Dichtung (3) vorgelagert ist, und dessen äußerer Durchmesser sich von seinem in Einführungsrichtung vorderen Ende nach hinten erweitert.

2. Muffenadapter (1) nach Anspruch 1,
**dadurch gekennzeichnet,**
**dass** der Führungsring (10) aus Metall besteht.

3. Muffenadapter (1) nach Anspruch 1 oder 2,
**dadurch gekennzeichnet,**
**dass** der Führungsring (10) aus PVC besteht.

4. Muffenadapter (1) nach einem der vorhergehenden Ansprüche,
**dadurch gekennzeichnet,**
**dass** sich der äußere Durchmesser des Führungsrings (10) konkav gebogen erweitert.

5. Muffenadapter (1) nach einem der vorhergehenden Ansprüche,
**dadurch gekennzeichnet,**
**dass** der Führungsring (10) an seinem vorderen Ende eine Vorderkante (11) aufweist, deren äußerer Durchmesser so gering bemessen ist, dass der Führungsring (10) dazu bestimmt ist, zunächst kraftfrei in eine Dichtung des Rohrbauteils eingeführt zu werden und mit der Vorderkante (11) in die Dichtung einzutauchen, bis zu einem zirkumferenten Kontakt des Führungsrings (10) mit der Dichtung des Rohrbauteils,
wobei sich der äußere Durchmesser des Führungsrings (10) über die zirkumferente Kontaktlinie hinaus nach hinten noch weiter vergrößert.

6. Muffenadapter (1) nach Anspruch 4 oder 5,
**dadurch gekennzeichnet,**
**dass** die äußere Oberfläche des Führungsrings (10) im Anschluss an den konkav gebogenen Abschnitt konvex gebogen verläuft,
wobei sich der äußere Durchmesser des Führungsrings (10) auch noch in dem konvex gebogenen Abschnitt erweitert.

7. Muffenadapter (1) nach einem der vorhergehenden Ansprüche,
**dadurch gekennzeichnet,**
**dass** die äußere Oberfläche des Führungsrings (10) in radialer und / oder axialer Richtung des Muffenadapters (1) mit Rippen und / oder Rillen versehen ist.

## Claims

1. Sleeve adapter (1),
• with a cylindrical tube section (2),
• a seal (3) made of an elastically deformable material surrounding the pipe section (2) on the outside,
where the seal (3) has a first section (15) with which it tightly adjoins the pipe section (2),
and a second section (16) which can be moved radially outwards relative to the pipe section (2),
• and with at least one expansion element, which is arranged between the pipe section (2) and the second section (16) of the seal (3), and which is movable radially outwards such that the outer diameter of the seal (3) is variable depending on the respective position of the expansion element,
• and with a male end in the area of the seal (3) intended to be inserted into a pipe component,
• where the seal (3) is intended to be applied tightly to the pipe component,
**characterized**
**in that** a guide ring (10) is arranged at the insertion end,
which consists of a material that is harder than the seal (3),
is located in the insertion direction of the seal (3),
and whose outer diameter widens rearward from its front end in the insertion direction.

2. Sleeve adapter (1) according to claim 1, **characterized,**
**in that** the guide ring (10) is made of metal.

3. Sleeve adapter (1) according to claim 1 or 2,
**characterized in that** the guide ring (10) is made of PVC.

4. Sleeve adapter (1) according to one of the preceding claims,
**characterized in that** the outer diameter of the guide ring (10) widens in a concave manner.

5. Sleeve adapter (1) according to one of the preceding claims,
**characterized**
**in that** the guide ring (10) has a front edge (11) at its front end, the outer diameter of which is dimensioned so small that the guide ring (10) is intended to be initially introduced without force into a seal of the pipe component and to be connected to the front edge (11) plunging into the seal, until the guide ring (10) comes into circumferential contact with the seal of the pipe component,
where the outer diameter of the guide ring (10) increases further to the rear beyond the circumferential contact line.

6. Sleeve adapter (1) according to claim 4 or 5, **characterized**
**in that** the outer surface of the guide ring (10) is convexly curved following the concavely curved section,
where the outer diameter of the guide ring (10) also expands in the convex curved section.

7. Sleeve adapter (1) according to one of the preceding claims, **characterized**
**in that** the outer surface of the guide ring (10) is provided with ribs and/or grooves in the radial and/or axial direction of the sleeve adapter (1).

## Revendications

1. Adaptateur à manchon (1),
• comprenant un segment cylindrique (2) de tuyau,
• un joint (3) en matériau élastiquement déformable entourant la circonférence extérieure du segment (2) de tuyau,
sachant que le joint (3) présente un premier segment (15) par lequel il se raccorde de façon étanche au segment (2) de tuyau,
ainsi qu'un deuxième segment (16) déplaçable radialement vers l'extérieur par rapport au segment de tuyau (2),
• et comprenant au moins un élément de dilatation disposé entre le segment (2) de tuyau et le deuxième segment (16) du joint (3),
et qui est déplaçable radialement vers l'extérieur
de façon que le diamètre extérieur du joint (3) soit variable en fonction de la position ponctuelle de l'élément de dilatation,
• et comprenant une extrémité enfichable dans la zone du joint (3), extrémité qui est destinée à être introduite dans un composant en forme de tuyau,
• sachant que le joint (3) sert à être appliqué de façon étanche contre le composant en forme de tuyau,
**caractérisé en ce**
**qu'**à l'extrémité enfichable est disposée une bague de guidage (10),
composée d'un matériau plus dur que celui du joint (3),
et qui se trouve en amont du joint (3) observé dans le sens d'introduction,
et dont le diamètre extérieur augmente en partant de son extrémité avant - observée dans le sens de l'introduction - en direction de l'arrière.

2. Adaptateur à manchon (1) selon la revendication 1, **caractérisé en ce**
**que** la bague de guidage (10) est en métal.

3. Adaptateur à manchon (1) selon l'une des revendications 1 ou 2, **caractérisé**
**en ce**
**que** la bague de guidage (10) est en PVC.

4. Adaptateur à manchon (1) selon l'une des revendications précédentes,
**caractérisé en ce**
**que** le diamètre extérieur de la bague de guidage (10) va en s'évasant selon une incurvation concave.

5. Adaptateur à manchon (1) selon l'une des revendications précédentes,
**caractérisé en ce**
**que** la bague de guidage (10) présente, à son extrémité avant, une bordure avant (11) dont le diamètre extérieur est dimensionné réduit de façon que la bague de guidage (10) soit destinée à être introduite d'abord sans forcer dans un joint du composant en forme de tuyau, et à plonger par la bordure avant (11) dans le joint, jusqu'à l'établissement d'un contact circonférentiel entre la bague de guidage (10) et le joint du composant en forme de tuyau,
sachant que le diamètre extérieur de la bague de guidage (10) continue de s'évaser vers l'arrière, au-delà de la ligne de contact circonférentielle.

6. Adaptateur à manchon (1) selon l'une des revendications 4 ou 5,
**caractérisé en ce**
**que** la surface extérieure de la bague de guidage (10) présente, à la suite du segment incurvé concave, un tracé incurvé convexe,
sachant que le diamètre extérieur de la bague de guidage (10) va encore s'élargissant encore dans le segment incurvé convexe.

7. Adaptateur à manchon (1) selon l'une des revendications précédentes,
**caractérisé en ce**
**que** la surface extérieure de la bague de guidage (10) est munie, en direction radiale et/ou axiale de l'adaptateur (1) à manchon, de nervures et/ou de rainures.
